(19) Europäisches Patentamt
European Patent Office
Office européen des brevets

(11) **EP 2 989 708 B1**

(12) **EUROPÄISCHE PATENTSCHRIFT**

(45) Veröffentlichungstag und Bekanntmachung des Hinweises auf die Patenterteilung:
**10.06.2020 Patentblatt 2020/24**

(21) Anmeldenummer: **14717125.0**

(22) Anmeldetag: **10.04.2014**

(51) Int Cl.:
***H02J 3/38*** (2006.01)

(86) Internationale Anmeldenummer:
**PCT/EP2014/057304**

(87) Internationale Veröffentlichungsnummer:
**WO 2014/173695 (30.10.2014 Gazette 2014/44)**

(54) **VERFAHREN ZUM EINSPEISEN ELEKTRISCHER LEISTUNG IN EIN ELEKTRISCHES VERSORGUNGSNETZ**

METHOD FOR FEEDING ELECTRICAL POWER INTO AN ELECTRICAL SUPPLY NETWORK

PROCÉDÉ POUR INJECTER DE L'ÉNERGIE ÉLECTRIQUE DANS UN RÉSEAU D'ALIMENTATION ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **22.04.2013 DE 102013207255**

(43) Veröffentlichungstag der Anmeldung:
**02.03.2016 Patentblatt 2016/09**

(73) Patentinhaber: **Wobben Properties GmbH**
**26607 Aurich (DE)**

(72) Erfinder:
• **BEEKMANN, Alfred**
**26639 Wiesmoor (DE)**
• **BUSKER, Kai**
**26629 Großefehn (DE)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
**EP-A2- 2 275 674          DE-A1-102008 017 715**
**DE-A1-102008 039 429     US-A1- 2013 015 660**

## Beschreibung

Die vorliegende Erfindung betrifft ein Verfahren zum Einspeisen elektrischer Leistung wenigstens einer Windenergieanlage oder eines Windparks in ein elektrisches Versorgungsnetz. Weiterhin betrifft die vorliegende Erfindung eine Windenergieanlage zum Einspeisen elektrischer Energie in ein elektrisches Versorgungsnetz und sie betrifft einen Windpark, der mehrere Windenergieanlagen umfasst, zum Einspeisen elektrischer Energie in ein elektrisches Versorgungsnetz.

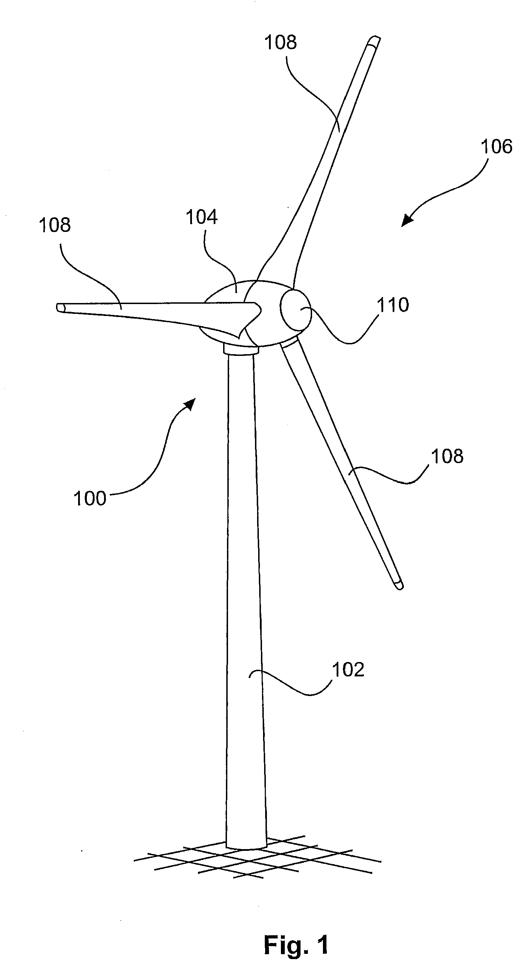

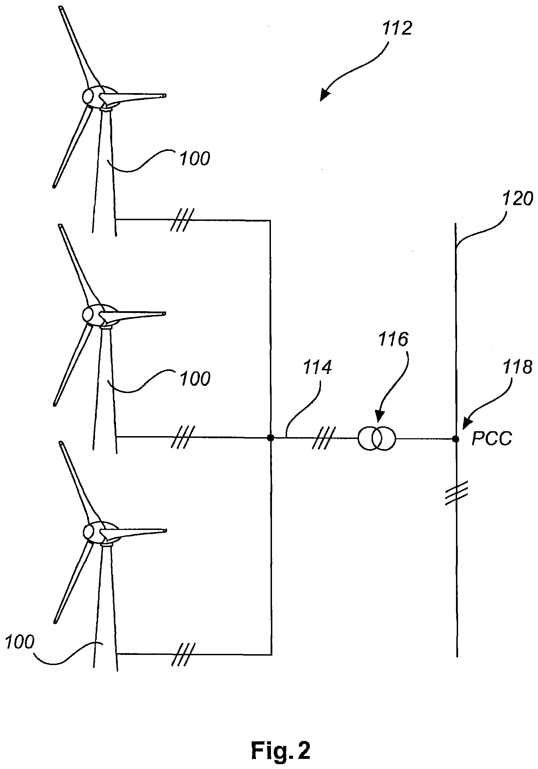

Eine Windenergieanlage ist schematisch in Figur 1 und ein Windpark schematisch in Figur 2 dargestellt.

Windenergieanlagen sind allgemein bekannt und dienen heutzutage vornehmlich dem Zweck, in ein elektrisches Versorgungsnetz einzuspeisen. Dabei passt die Windenergieanlage den einzuspeisenden Strom nach Frequenz und Phase und unter Berücksichtigung der entsprechenden Spannung an das elektrische Versorgungsnetz an. Das ist eine Grundvoraussetzung, die in jedem Fall erfüllt werden muss und von bekannten Windenergieanlagen auch erfüllt wird. Gleiches gilt für einen Windpark, der mehrere Windenergieanlagen aufweist, die gemeinsam über einen gemeinsamen Netzanschlusspunkt (PCC) in ein elektrisches Versorgungsnetz einspeisen. In diesem Fall speist der Windpark in das elektrische Versorgungsnetz ein.

Es ist bereits vor einiger Zeit erkannt worden, dass es nicht nur wünschenswert sein kann, mit der Windenergieanlage bzw. dem Windpark möglichst viel elektrische Leistung in das Versorgungsnetz einzuspeisen, das vereinfachend auch nachfolgend als Netz bezeichnet wird, sondern die Windenergieanlage bzw. den Windpark auch zum Stützen des Netzes zu verwenden. Entsprechende Lösungsvorschläge beschreiben die Patentanmeldungen US 6,784,564, US 6,891,281, US 6,965,174 und US 7,462,946. Diese Anmeldungen schlagen bereits vor, abhängig von einer Spannung oder einer Frequenz im Versorgungsnetz die einzuspeisende Leistung bzw. den einzuspeisenden Strom nach Höhe und/oder nach Art zu verändern, um dadurch das Versorgungsnetz zu stützen.

Heutzutage liegt in vielen Ländern die Situation vor, dass Windenergieanlagen in einem Versorgungsnetz einen immer größeren Anteil der Gesamtleistung ausmachen. Das führt dazu, dass die Notwendigkeit das Netz durch Windenergieanlagen zu stützen steigt. Es steigt auch die Dominanz der Windenergieanlagen im Netz und damit ihre Einflussmöglichkeit. Entsprechend wirksam kann auch eine Netzstützung durch die Windenergieanlagen bzw. Windparks im Netz sein.

Das Deutsche Patent- und Markenamt hat in der Prioritätsanmeldung zu vorliegender Anmeldung folgenden weiteren Stand der Technik recherchiert: "Technische Richtlinie Erzeugungsanlagen am Mittelspannungsnetz, BDEW, Ausgabe Juni 2008" und "TransmissionCode 2007, Network and System Rules of the German Transmission System Operators, VDN, August 2007".

Die Offenlegungsschrift DE 10 2008 017 715 A1 beschreibt ein Verfahren zum Betreiben einer Windenergieanlage mit einer doppelt gespeisten Asynchronmaschine, die einen netzseitigen und einen generatorseitigen Umrichter aufweist, welche mit einer Steuerung angesteuert werden.

Die Offenlegungsschrift DE 10 2008 039 429 A1 beschreibt ein Verfahren zur Regelung eines Windparks, bestehend aus mehreren Windenergieanlagen, wobei der Windpark über einen Steuereingang verfügt mittels dem Sollregelgrößen des Windparks eingestellt werden können.

Die Europäische Patentanmeldung EP 2 275 674 A2 beschreibt ein Verfahren zum Betrieb eines Windparks, bestehend aus mehreren Windenergieanlagen, wobei wenigstens eine der Windenergieanlagen des Windparks über einen Steuereingang verfügt, mittels dem die elektrische Leistung des Windparks bzw. einer oder mehrerer einzelner Windenergieanlage(n) in einem Bereich von 0 bis 100% der jeweiligen zur Verfügung zu stellenden Leistung eingestellt werden kann.

Die US-Patentanmeldung US 2013/0015660 A1 beschreibt ein Verfahren zum Steuern eines Windparks umfassend wenigstens eine Windenergieanlage zum Einspeisen elektrischer Leistung in ein Versorgungsnetz, wobei der Betrag der eingespeisten Leistung in Abhängigkeit einer Spannungsänderung eingestellt wird.

Die US-Patentanmeldung US 2010/0207456 A1 beschreibt ein Verfahren zum Steuern kleiner dezentraler Energieressourcen und dazugehöriger Lasten, die mit einem elektrischen Versorgungsnetz verbunden sind. Dabei werden insbesondere Mikroquellen angesteuert, die Leistung mit einer bestimmten Frequenz einspeisen.

Die WO-Schrift WO 2012/056564 beschreibt ein Steuerungssystem für mehrere Windturbinen, die einen Windpark ausbilden, wobei das Steuerungssystem Daten über eine gesteuerte Windturbine an eine andere Windturbinen übermittelt und Daten über andere gesteuerte Windturbinen empfängt.

Die Offenlegungsschrift CN 100566069 C beschreibt ein Verfahren zum Betreiben eines Windparks sowie auch einen Windpark als solchen. Es wird dabei in der Offenlegungsschrift vorgeschlagen, den Windpark mit einer angehobenen Leistung zu betreiben, wobei die von dem Windpark an das Netz abgegebene Leistung in Abhängigkeit der Netzfrequenz des elektrischen Netzes geregelt bzw. eingestellt wird.

Der vorliegenden Erfindung liegt somit die Aufgabe zugrunde, wenigstens eines der genannten Probleme zu adressieren. Insbesondere soll eine Lösung vorgeschlagen werden, die der steigenden Bedeutung der Windenergieanlagen zur Stützung des Netzes gerecht wird bzw. dazu zumindest einen Beitrag leistet. Insbesondere soll eine Netzstützung durch Windenergieanlagen bzw. Windparks qualitativ und/oder quantitativ verbessert werden. Zumindest soll eine alternative Lösung vorgeschlagen werden.

Erfindungsgemäß wird ein Verfahren nach Anspruch 1 vorgeschlagen. Demnach wird elektrische Leistung wenigstens einer Windenergieanlage oder eines Windparks in ein elektrisches Versorgungsnetz eingespeist. Das Versorgungsnetz weist eine Netzspannung und eine Netzfrequenz auf. Das Verfahren ist zum Einspeisen elektrischer Wirkleistung P als auch elektrischer Blindleistung Q vorbereitet. Das Verfahren und entsprechend die Windenergieanlage bzw. der Windpark, die bzw. der das Verfahren umsetzt ist somit zum Einspeisen elektrischer Wirkleistung, als auch zum Einspeisen elektrischer Blindleistung vorbereitet.

Die eingespeiste Wirkleistung P ist dabei über eine Wirkleistungssteuerung in Abhängigkeit wenigstens eines Netzzustandes einstellbar. Die Wirkleistung wird also nicht fest vorgegeben, oder nur abhängig von dem vorherrschenden Wind eingespeist, sondern sie wird in Abhängigkeit wenigstens eines Netzzustandes, wie bspw. der Netzfrequenz, eingestellt.

Außerdem oder alternativ wird die eingespeiste Blindleistung Q nicht fest vorgegeben, sondern in Abhängigkeit wenigstens eines Netzzustandes, wie bspw. der Netzspannung, eingestellt.

Dabei wird vorgeschlagen, dass die Wirkleistungssteuerung nach Typ und/oder in ihrer Parametrierung veränderbar ist. Die Abhängigkeit der eingespeisten Wirkleistung P von dem wenigstens einen Netzzustand, wie bspw. der Netzfrequenz, kann somit - selbst bei gleichbleibenden Windverhältnissen - verändert werden. Bspw. wird die Wirkleistung in einem Fall mit steigender Frequenz verringert, sobald die Netzfrequenz 0,1 Prozent über ihrer Nennfrequenz liegt, wohingegen eine solche Reduzierung in einem anderen Fall erst erfolgt, wenn die Netzfrequenz 0,2 Prozent ihres Nennwertes überschritten hat. Auch die Steigung der dann folgenden frequenzabhängigen Reduzierung der eingespeisten Leistung kann anders gewählt werden.

Dabei kann die eingespeiste Wirkleistung P abschnittsweise über einen linearen Zusammenhang von dem Netzzustand, insbesondere der Netzfrequenz abhängen. Dieser abschnittsweise lineare Zusammenhang kann bspw. in einen nicht-linearen Zusammenhang, wie bspw. über eine Hysteresefunktion, geändert werden, was ein Beispiel für eine Änderung des Typs der Wirkleistungssteuerung ist. Das kann auch ein sinngemäß Beispiel für die Änderung des Typs der Blindleistungssteuerung sein.

Liegt, um das obige Beispiel aufzugreifen, ein abschnittsweise linearer Zusammenhang zugrunde, kann gemäß einer weiteren Ausführungsform dessen Steigung verändert werden. Das kann ein Beispiel für die Veränderung der Parametrierung der Wirkleistungssteuerung - und sinngemäß der Blindleistungssteuerung - sein.

Außerdem oder alternativ wird vorgeschlagen, dass die Blindleistungssteuerung nach Typ und/oder ihrer Parametrierung veränderbar ist. Der Zusammenhang zwischen der Blindleistung Q und des wenigstens einen Zustandes, wie bspw. der Netzspannung, kann vorzugsweise in ihrem Typ und/oder in ihrer Parametrierung verändert werden. Für Beispiele einer Veränderung nach Typ einerseits und in der Parametrierung andererseits wird auf die allgemeinen Beispiele zur Veränderbarkeit der Wirkleistungssteuerung oben verwiesen.

Gemäß einer Ausführungsform wird vorgeschlagen, dass die Wirkleistungssteuerung für die einzuspeisende Wirkleistung einen Wirkleistungssollwert in Abhängigkeit wenigstens eines Netzzustandes vorgibt. Der Wirkleistungssollwert wird dabei insbesondere in Abhängigkeit der Netzfrequenz, in Abhängigkeit einer Änderung der Netzfrequenz und/oder in Abhängigkeit der Netzspannung vorgegeben. Die Änderung der Netzfrequenz kann hierfür über einen Gradient definiert sein oder erfasst werden, nämlich über eine partielle Ableitung der Frequenzänderung nach der Zeit.

Vorzugsweise wird vorgeschlagen, dass die Blindleistungssteuerung für die einzuspeisende Blindleistung einem Blindleistungssollwert in Abhängigkeit des wenigstens einen Netzzustandes vorgibt. Entsprechend wird also der Blindleistungssollwert insbesondere in Abhängigkeit der Netzspannung, in Abhängigkeit der Netzfrequenz und/oder in Abhängigkeit einer Änderung der Netzfrequenz vorgegeben.

Gemäß einer Ausführungsform wird die Wirkleistungssteuerung und außerdem oder alternativ die Blindleistungssteuerung in Abhängigkeit der Netzsensitivität geändert.

Hierbei wird unter einer Netzsensitivität die Reaktion des Netzes, insbesondere bezogen auf den gemeinsamen Netzanschlusspunkt, auf eine Änderung einer Größe verstanden, die auf das Netz wirkt. Die Netzsensitivität kann als Differenz einer Netzreaktion im Bezug auf eine Differenz einer Netzeinflussgröße definiert werden. Insbesondere kommt im vorliegenden Fall eine Definition im Bezug auf eingespeiste Wirkleistung und Höhe der Netzspannung in Betracht. Vereinfacht kann beispielsweise für die Netzsensitivität NS die folgende Formel definiert werden:

$$NS = \frac{\Delta U}{\Delta P}$$

Hierbei bezeichnet $\Delta P$ die Änderung der eingespeisten Wirkleistung, nämlich der eingespeisten Parkleistung und $\Delta U$ die resultierende Änderung der Netzspannung U. Diese Differenzen werden über einen sehr kurzen Zeitraum gebildet, insbesondere im Bereich von einer Sekunde oder darunter und vorteilhafterweise kann auch statt dieser anschaulichen Formel über die Differenz der Spannung im Bezug auf die Differenz der Leistung entsprechend eine partielle Ableitung der Netzspannung U nach der eingespeisten Parkleistung P gebildet werden. Es kommt als Netzreaktion auch die Änderung der Netzfrequenz f in Betracht. Eine weitere Möglichkeit der Berücksichtigung der Netzsensitivität wäre über die Formel:

$$NS = \frac{\Delta f}{\Delta P}$$

Die Netzsensitivität wird somit vorzugsweise als Maß für die zu wählende bzw. zu ändernde Wirkleistungssteuerung und/oder die zu wählende bzw. zu ändernde Blindleistungssteuerung verwendet. Ändert sich die Netzsensitivität zumindest signifikant, kann die entsprechende Wirkleistungssteuerung und/oder die entsprechende Blindleistungssteuerung in Art und/oder Parametrierung geändert werden. Eine Änderung der Art entspricht einer Änderung des Typs der Steuerung, was hier synonym verwendet wird.

Gemäß einer weiteren Ausführungsform wird die Wirkleistungssteuerung und/oder die Blindleistungsteuerung in Abhängigkeit eines Kurzschlussstromverhältnisses am Einspeisepunkt verändert.

Das Kurzschlussstromverhältnis, das auch als SCR (Short Circuit Ratio) bezeichnet wird, bezeichnet das Verhältnis der Kurzschlussleistung zur Anschlussleistung. Hierbei wird unter Kurschlussleistung diejenige Leistung verstanden, die das betreffende Versorgungsnetz an dem betrachteten Netzanschlusspunkt, an dem die Windenergieanlage bzw. der Windpark angeschlossen ist, bereitstellen kann, wenn an diesem Netzanschlusspunkt ein Kurzschluss auftritt. Die Anschlussleistung ist die Anschlussleistung der angeschlossenen Windenergieanlage bzw. des angeschlossenen Windparks und damit insbesondere die Nennleistung des anzuschließenden Generators bzw. die Summe aller Nennleistungen der Generatoren des Windparks. Das Kurzschlussstromverhältnis ist somit ein Kriterium zur Stärke des elektrischen Versorgungsnetzes in Bezug auf diesen betrachteten Netzanschlusspunkt. Ein auf diesen Netzanschlusspunkt bezogenes starkes elektrisches Versorgungsnetz weist meist ein großes Kurzschlussstromverhältnis von bspw. SCR = 10 oder größer auf.

Es wurde erkannt, dass das Kurzschlussstromverhältnis auch eine Information über das Verhalten des betreffenden Versorgungsnetzes am Netzanschlusspunkt gegeben kann. Dabei kann das Kurzschlussstromverhältnis auch Variieren.

Vorteilhaft ist es, bei der Neuinstallation eines Windparks oder einer Windenergieanlage das Kurzschlussstromverhältnis zu berücksichtigen und die Wirkleistungssteuerung und die Blindleistungssteuerung daran anzupassen. Es wird vorzugsweise weiter vorgeschlagen, das Kurzschlussstromverhältnis auch nach der Installation und Inbetriebnahme einer Windenergieanlage bzw. eines Windparks in regelmäßigen Abständen zu erfassen. Die Erfassung der Kurzschlussleistung kann bspw. über Informationen über die Netztopologie mit Hilfe einer Simulation erfolgen. Die Anschlussleistung kann einfach über die Kenntnis der installierten Windenergieanlagen in einem Park erfolgen und/oder sie kann über die Messung der eingespeisten Leistung bei Nennwind erfolgen.

Vorzugsweise wird eine Anschlussleistung zur vorgeschlagenen Berechnung und Berücksichtigung des Kurzschlussstromverhältnisses als Summe der Nennleistung aller jeweils aktuell verfügbaren Windenergieanlagen definiert und berechnet. Die Anschlussleistung würde sich in diesem Sinne somit bereits schon bei Ausfall einer Windenergieanlage ändern, zumindest vorrübergehend ändern. Damit würde sich auch das Kurzschlussstromverhältnis ändern und hierüber könnte eine Änderung der Wirkleistungssteuerung und/oder der Blindleistungssteuerung ausgelöst werden.

Gemäß einer weiteren Ausführungsform wird vorgeschlagen, dass die Anschlussleistung als Summe der aktuell verfügbaren Leistung im Windpark unter Berücksichtigung der vorherrschenden Windverhältnisse berechnet wird, bzw. dass anstelle der Anschlussleistung des Windparks die Summe der aktuell verfügbaren Leistungen des Windparks zur Berechnung des Kurzschlussstromverhältnisses verwendet wird und/oder als Änderungskriterium zum Ändern der Wirkleistungssteuerung und/oder der Blindleistungssteuerung verwendet wird. Es wird also auf dieser so ermittelten Parkleistung das Kurzschlussstromverhältnis neu berechnet, um diese Änderungsbedingung zu bestimmen, oder es kann auch unmittelbar aus der im Park verfügbaren Leistung ein Änderungskriterium abgeleitet werden.

Bspw. kann die Umschaltbedingung so aussehen, dass ein Parameter, wie ein Verstärkungsfaktor oder die Steigung einer Funktion von dem Kurzschlussstromverhältnis, oder einem anderen Kriterium, abhängt. Bspw. könnte eine proportionale Abhängigkeit bestehen. Als weiteres Beispiel, das aber nicht abschließend ist, kann ein Grenzwert festgelegt werden und von einer Wirkleistungssteuerung auf eine dem Typ nach andere Wirkleistungssteuerung umgeschaltet werden, wenn das Kurzschlussstromverhältnis oder ein anderes Kriterium diesen Grenzwert überschreitet bzw. unterschreitet. Ähnliches gilt auch für eine Änderung der Blindleistungssteuerung.

Vorzugsweise erfolgt eine Veränderung der Wirkleistungssteuerung und/oder Blindleistungssteuerung durch eine externe Vorgabe, wie bspw. über ein externes Signal, das an einem Prozessrechner, der die Wirkleistungssteuerung und/oder die Blindleistungssteuerung durchführt, eingegeben wird. Vorzugsweise wird eine solche Vorgabe von einem Netzbetreiber gemacht, der dafür ein solches externes Signal übermittelt.

Auch hierdurch können einer oder mehrere Parameter geändert werden oder es wird auf einen anderen Typ bzw. eine andere Art der Wirkleistungssteuerung oder Blindleistungssteuerung umgeschaltet. Gemäß einer Ausführungsform kann auch die gewünschte neue Konfiguration der jeweiligen Wirkleistungssteuerung oder Blindleistungssteuerung übertragen werden. Es können also zu ändernde Parameter übertragen werden oder es kann sogar ein neuer Algorithmus übertragen werden.

Gemäß einer Ausgestaltung der Erfindung wird vorgeschlagen, dass die eingespeiste Wirkleistung und/oder die eingespeiste Blindleistung über eine Einstellfunktion in Abhängigkeit des Netzzustandes eingestellt wird. Eine solche Einstellfunktion gibt insbesondere den Sollwert der einzuspeisenden Wirkleistung bzw. der einzuspeisenden Blindleistung als von dem Netzzustand abhängige Funktion aus. Es wird nun vorgeschlagen, dass diese Einstellfunktion verändert oder gewechselt wird. Bspw. kann abschnittsweise die Steigung dieser Einstellfunktion geändert werden, oder es wird ein anderer Funktionstyp als Einstellfunktion verwendet, als vorher. Hierdurch wird die Wirkleistungssteuerung und/oder die Blindleistungssteuerung nach Typ und/oder in ihrer Parametrierung verändert. Es wird also vorgeschlagen, dass funktionale Zusammenhänge verändert werden. Auch eine solche Veränderung kann in Abhängigkeit der Netzsensitivität, eines Kurzschlussstromverhältnisses und/oder einer externen Vorgabe erfolgen.

Eine weitere Ausführungsform schlägt vor, dass die eingespeiste Wirkleistung mit ansteigender Netzfrequenz reduziert wird, sobald die Netzfrequenz einen Frequenzschwellwert überschreitet bzw. erreicht und dass die eingespeiste Wirkleistung weiter reduziert wird, bis die Frequenz einen Frequenzoberwert erreicht hat. Hierdurch kann eine abschnittsweise frequenzabhängige Leistungsreduzierung realisiert werden. Hierzu wird nun vorgeschlagen, dass die Steigung dieser Leistungsreduzierung veränderbar ist, insbesondere abhängig von den oben dazu genannten Kriterien. Außerdem oder alternativ wird vorgeschlagen, dass der Frequenzschwellwert veränderbar ist und außerdem oder alternativ soll der Frequenzoberwert veränderbar sein. Durch diese Werte kann eine frequenzabhängige Wirkleistungsänderung definiert werden und diese Werte, nämlich die Frequenz ab der reduziert wird, die Frequenz bis zu der reduziert wird und/oder die dazwischen vorzusehende Steigung können verändert werden.

Zu dieser Ausführungsform wird vorgeschlagen, sie auch sinngemäß für eine Wirkleistungserhöhung bei abfallender Netzfrequenz einzusetzen. Somit ist das Steuerverhalten vergleichsweise einfach über diese wenigen Parameter veränderbar.

Erfindungsgemäß wird zudem eine Windenergieanlage vorgeschlagen, die dazu vorbereitet ist, ein Verfahren gemäß einer der dargestellten Ausführungsformen umzusetzen. Insbesondere weist eine solche Windenergieanlage einen entsprechenden Prozessrechner und einen entsprechenden Frequenzwechselrichter auf, der zum Durchführen solcher Blindleistungseinspeisung und/oder Wirkleistungseinspeisung geeignet ist. Insbesondere sollte der verwendete Wechselrichter bzw. die verwendete Windenergieanlage FACTS-fähig sein.

Außerdem wird ein Windpark vorgeschlagen, der dazu vorbereitet ist, ein Verfahren gemäß einer der beschriebenen Ausführungsformen umzusetzen. Insbesondere ist er dazu vorbereitet, elektrische Wirkleistung und elektrische Blindleistung in ein Versorgungsnetz einzuspeisen und dazu eine veränderbare Wirkleistungssteuerung und/oder eine veränderbare Blindleistungssteuerung zu verwenden. Vorzugsweise speist dieser Windpark über einen gemeinsamen Netzanschlusspunkt in das Versorgungsnetz ein. Auch für den Windpark ist es vorteilhaft, wenn dieser FACTS-fähig ist.

Nachfolgend wird die Erfindung anhand von Ausführungsformen unter Bezugnahme auf die begleitenden Figuren beispielhaft erläutert.

Figur 1     zeigt schematisch eine Windenergieanlage.

Figur 2     zeigt schematisch einen Windpark.

Figur 3     zeigt schematisch eine Windenergieanlage, die zum Einspeisen ein erfindungsgemäßes Verfahren gemäß einer Ausführungsform einsetzt.

Figur 4     zeigt veranschaulichend und beispielhaft zwei unterschiedlich geartete Einstellfunktionen zum Einstellen der Leistung P in Abhängigkeit der Netzfrequenz.

Figur 5     zeigt ein beispielhaft und veranschaulichend eine Einstellfunktion zum Einstellen der Leistung P in Abhängigkeit der Netzfrequenz f mit Variationsmöglichkeiten.

Fig. 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

Fig. 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112, die beispielsweise keine Steuerung zeigt, obwohl natürlich eine Steuerung vorhanden ist. Auch kann beispielsweise das Parknetz 114 anders gestaltet sein, in dem beispielsweise auch ein Transformator am Ausgang jeder Windenergieanlage 100 vorhanden ist, um nur ein anderes Ausführungsbeispiel zu nennen.

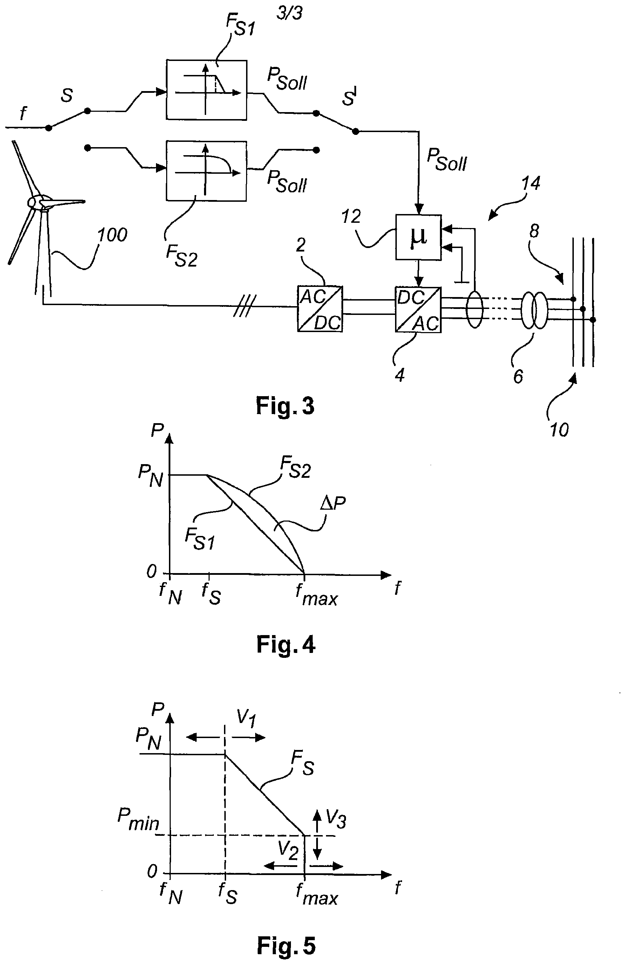

Figur 3 veranschaulicht eine Windenergieanlage 100, die bspw. einen dreiphasigen Generatorstrom einem Gleichrichter 2 zuführt, der wiederum mit einem Wechselrichter 4 verbunden ist, der einen dreiphasigen Wechselstrom erzeugt, um diesen über einen Transformator 6 an einem Einspeisepunkt 8 (PCC) in ein elektrisches Versorgungsnetz 10 einzuspeisen. Die Steuerung des Wechselrichters 4 erfolgt über eine Steuereinheit 12, die bspw. als ein oder mehrere Prozessrechner ausgebildet sein kann. Die Steuereinheit 12 verwertet bspw. auch Messwerte über Strom und Spannung nach Amplitude, Frequenz und Phase ihres ausgegebenen dreiphasigen Stroms. Hierzu ist eine Messrückführung 14 veranschaulichend dargestellt.

Die Struktur der Figur 3 veranschaulicht zudem, dass die Steuereinheit 12 einen Leistungssollwert berücksichtigt und entsprechend den Wechselrichter 4 so ansteuern wird, dass der eine solche gewünschte Leistung P ausgibt. Idealisierend ist die von dem Wechselrichter 4 ausgegebene Leistung P identisch mit der Sollleistung $P_{soll}$, so dass gilt $P = P_{soll}$. Weiter kann für die vorliegende Betrachtungen idealisierend davon ausgegangen werden, dass die erzeugte Leistung P auch diejenige ist, die in das Netz 10 eingespeist wird. Bei der vorliegenden Betrachtung werden also Verluste bei der Einspeisung und dynamische Vorgänge zwischen der Sollleistung und der erzeugten Leistung vernachlässigt.

Die Struktur der Figur 3 veranschaulicht nun, dass dieser Wirkleistungssollwert $P_{soll}$ und damit idealisierend auch die einzuspeisende Wirkleistung P in Abhängigkeit der Frequenz f bestimmt bzw. vorgegeben wird. Dazu stehen zwei Einstellfunktionen $F_{S1}$ und $F_{S2}$ zur Verfügung, die hier repräsentativ für weitere Einstellfunktionen dargestellt sind. Es ist nun ein Schalter S und ein damit zusammen arbeitender Schalter S' gezeigt, die veranschaulichen, dass je nach Schalterstellung, also je nach Auswahl, die Wirkleistung $P_{soll}$ über die erste oder zweite Einstellfunktion $F_{S1}$ bzw. $F_{S2}$ vorgegeben werden kann. Die Wahlmöglichkeit mittels des Schalters S bzw. S' ist insoweit nur eine Veranschaulichung und eine solche Auswahlmöglichkeit kann bspw. auch in der Steuereinheit 12 umgesetzt sein, so dass die Steuereinheit 12 also unmittelbar die Netzfrequenz f empfängt. Außerdem ist eine solche Umschaltung vorzugsweise im Prozessrechner realisiert, indem der bspw. je nach gewählter Einstellfunktion auf einen entsprechenden Datenspeicher zurückgreift, in dem die gewünschte Einstellfunktion hinterlegt ist.

Figur 3 veranschaulicht, dass eine Einstellfunktion für die einzuspeisende Wirkleistung und damit eine Wirkleistungssteuerung änderbar ist. Hier ist eine Wirkleistungssteuerung in Abhängigkeit der Netzfrequenz f beispielhaft gezeigt. Die Veranschaulichung soll aber repräsentativ stehen auch für eine Steuerung in Abhängigkeit eines anderen Netzzustandes wie bspw. der Netzspannung oder einer Änderung der Netzfrequenz. Sinngemäß ist auch eine netzzustandsabhängige Blindleistungssteuerung in dem veranschaulichten und beschriebenen Sinne umsetzbar. Auch hier können unterschiedliche Netzzustände als Eingangsgröße für die Blindleistungssteuerung verwendet werden.

Die in Figur 3 veranschaulicht gewählten Einstellfunktionen $F_{S1}$ und $F_{S2}$ sind in Figur 4 beispielhaft gezeigt. Figur 4 zeigt somit beispielhaft zwei Einstellfunktionen $F_{S1}$ und $F_{S2}$. Beide Einstellfunktionen zeigen die vorgegebene Abhängigkeit der Wirkleistung P in Abhängigkeit der Netzfrequenz f. Bei nominaler Netzfrequenz $f_N$ weist die Leistung P ihren Nennwert $P_N$ auf. Insoweit ist die Figur 4 für die Situation gezeigt, dass die vorherrschenden Windverhältnisse das Einspeisen mit Nennleistung $P_N$ überhaupt möglichen machen. Ist dies nicht möglich und kann nur eine kleinere Leistung eingespeist werden, weil bspw. der Wind schwach ist, ist der gezeigte Zusammenhang der Figur 4 auch auf diese geringere, verfügbare Leistung anwendbar, indem bspw. diese anstelle des gezeigten Nennwertes $P_N$ verwendet wird.

Mit zunehmender Frequenz f bleibt die Wirkleistung P zunächst unverändert, bis die Frequenz f den Frequenzschwellwert $f_S$ erreicht hat. Dann wird die Wirkleistung P mit weiter steigender Frequenz reduziert. Diese Reduktion erfolgt nun je nach ausgewählter Wirkleistungssteuerung und damit je nach ausgewählter Einstellfunktion unterschiedlich.

Die erste Einstellfunktion $F_{S1}$ zeigt dabei einen linearen Verlauf, bei dem die Wirkleistung P dann von dem Frequenzschwellwert $f_S$ linear bis zum maximalen Frequenzwert $f_{max}$ auf 0 abfällt. Gemäß der anderen gezeigten Einstellfunktion wird ein Verlauf im Sinne einer quadratischen Funktion mit negativem Vorzeichen vorgeschlagen. Auch diese reduziert die Wirkleistung P von der Schwellfrequenz $f_S$ bis zur maximalen Frequenz $f_{max}$ auf den Leistungswert 0. Allerdings verschafft der anders gewählte Verlauf die Möglichkeit einer höheren Leistungseinspeisung, was durch den Zwischenraum zwischen diesen beiden Einstellfunktionen $F_{S1}$ und $F_{S2}$ veranschaulicht ist, der in der Figur 4 als $\Delta P$ gekennzeichnet ist. Die unterschiedlichen Einstellfunktionen unterscheiden sich insoweit nur in einem Abschnitt und insoweit kann gemäß dem gezeigten Beispiel die Einstellfunktion abschnittsweise geändert werden. Die Änderung erfolgt vorzugsweise abhängig von einer Netzsensitivität oder einer Vorgabe des Netzbetreibers, um nur zwei Beispiele zu nennen.

Es wurde somit erkannt, dass je nach Situation, die nämlich bspw. von dem Netzbetreiber beurteilt werden kann, oder sich aus der Netzsensitivität ergibt, eine veränderte Wirkleistungssteuerung gewählt werden kann, die eine höhere Leistungseinspeisung ermöglicht.

Statt einer Veränderung über die Wahl einer gänzlich unterschiedlichen Einstellfunktion, nämlich bspw. einer linearen einerseits und einer quadratischen andererseits, wie dies Figur 4 veranschaulicht, kommt auch in Betracht, die Einstellfunktion $F_S$ dem Grunde nach unverändert zu lassen, aber einen oder mehrere Parameter zu verändern. Dies ist in Figur 5 veranschaulicht und es wird darauf hingewiesen, dass die in Figur 5 veranschaulichte Veränderung über die Änderung von Parametern auch dadurch vorgenommen werden kann, dass eine Umschaltung zwischen unterschiedlich parametrierten Einstellfunktionen vorgenommen wird. Insoweit wird auf die Erläuterung zu Figur 3 verwiesen, die auch in diesem Fall anwendbar sind. Andererseits können aber auch in der Steuereinheit oder einem anderem Prozessrechner jeweils die entsprechenden Parameter verstellt werden. Jedenfalls kommt auch eine solche Änderung über bspw. eine externe Vorgabe durch einen Netzbetreiber oder die Auswertung einer Netzsensitivität in Betracht, um nur zwei Beispiele zu nennen.

Figur 5 veranschaulicht insoweit eine Parameteränderung einer Einstellfunktion $F_S$. Diese Einstellfunktion $F_S$ entspricht im Grunde der Einstellfunktion $F_{S1}$ der Figur 4, wobei die Einstellfunktion $F_S$ der Figur 5 aber von dem Frequenzschwellwert $f_S$ zu dem maximalen Frequenzwert $f_{max}$ zunächst linear auf einen minimalen Leistungswert $P_{min}$ abfällt, der größer als 0 ist. Bei Erreichen dieser maximalen Frequenz $f_{max}$ bzw. unmittelbar nach ihrem Überschreiten wird die Leistung P dann auf 0 abgesenkt. Für dieses gezeigte Beispiel ergibt sich als erste Variationsmöglichkeit $v_1$ die Veränderung der Schwellfrequenz $f_S$, bei der die Veränderung, nämlich Reduzierung der Leistung startet, bezogen auf eine weiter zunehmende Frequenz f. Als zweite Variationsmöglichkeit $v_2$ besteht die Möglichkeit, den maximalen Frequenzwert $f_{max}$ zu verändern. Schließlich kann auch die Minimalleistung $P_{min}$ verändert werden, was als Variationsmöglichkeit 3 $v_3$ veranschaulicht ist. Durch diese dritte Variationsmöglichkeit $v_3$ wird im Übrigen auch die Steigung des linear abfallenden Bereichs der Einstellfunktion $F_S$ verändert.

Die Figuren 3 bis 5 veranschaulichen die vorgeschlagene Veränderung der Leistungssteuerungen in Abhängigkeit eines Netzzustandes beispielhaft an der Veränderung der Wirkleistungssteuerung in Abhängigkeit der Netzfrequenz als Netzzustand. Es kommt aber in der beschriebenen oder einer sinngemäßen Art und Weise ebenso in Betracht, die Wirkleistungssteuerung zu verändern und/oder dass anstelle der Frequenz als Netzzustand und zusätzlich dazu eine Frequenzänderung oder eine Netzspannung verwendet wird.

**Patentansprüche**

1.	Verfahren zum Einspeisen elektrischer Leistung wenigstens einer Windenergieanlage (100) oder eines Windparks (112) in ein elektrisches Versorgungsnetz (120) mit einer Netzspannung (U) und einer Netzfrequenz (f), wobei

- elektrische Wirkleistung (P) und/oder elektrische Blindleistung (Q) eingespeist wird und

- die eingespeiste Wirkleistung (P) über eine Wirkleistungssteuerung in Abhängigkeit wenigstens eines Netzzustandes eingestellt wird und/oder
- die eingespeiste Blindleistung (Q) über eine Blindleistungssteuerung in Abhängigkeit wenigstens eines Netzzustandes eingestellt wird,

**dadurch gekennzeichnet, dass**

- die eingespeiste Wirkleistung (P) und/oder die eingespeiste Blindleistung (Q) über eine Einstellfunktion ($F_{S1}$, $F_{S2}$) in Abhängigkeit des Netzzustandes eingestellt wird, wobei
- die Einstellfunktion einen Sollwert der einzuspeisenden Wirkleistung bzw. der einzuspeisenden Blindleistung als von dem Netzzustand abhängige Funktion ausgibt, und
- zum Einstellen der eingespeisten Wirkleistung (P) bzw. der eingespeisten Blindleistung (Q) die Einstellfunktion in Abhängigkeit einer Netzsensitivität verändert oder gewechselt wird,

wobei die Netzsensitivität NS definiert ist durch die Formel:

$$NS = \frac{\Delta U}{\Delta P}$$

oder durch die Formel

$$NS = \frac{\Delta f}{\Delta P}$$

mit $\Delta P$ als Änderung einer eingespeisten Wirkleistung, $\Delta U$ als resultierende Änderung der Netzspannung und $\Delta f$ als resultierende Änderung der Netzfrequenz.

2.	Verfahren nach Anspruch 1,
**dadurch gekennzeichnet, dass**
die Wirkleistungssteuerung und/oder die Blindleistungssteuerung in Abhängigkeit

- eines Kurzschlussstromverhältnisses (SCR) und/oder
- einer externen Vorgabe, insbesondere über ein externes Signal,

verändert wird.

3.	Verfahren nach Anspruch 1 oder 2,
**dadurch gekennzeichnet, dass**
die eingespeiste Wirkleistung (P) mit ansteigender Netzfrequenz (f) reduziert wird, sobald die Netzfrequenz (f) einen Frequenzschwellwert (fs) überschritten hat und bis sie einen Frequenzoberwert ($f_{max}$) erreicht hat, und dass die Steigung der netzfrequenzabhängigen Reduzierung und/oder der Frequenzschwellwert (fs) und/oder der Frequenzoberwert ($f_{max}$) veränderbar sind.

4. Windenergieanlage (100) zum Einspeisen elektrischer Leistung (P) in ein elektrisches Versorgungsnetz (120), wobei
die Windenergieanlage (100) dazu vorbereitet ist, elektrische Leistung (P) gemäß einem Verfahren nach einem der Ansprüche 1 bis 3 in das elektrische Versorgungsnetz (120) einzuspeisen.

5. Windpark (112) zum Einspeisen elektrischer Leistung (P) in ein elektrisches Versorgungsnetz (120), wobei
der Windpark (112) dazu vorbereitet ist, elektrische Leistung (P) gemäß einem Verfahren nach einem der Ansprüche 1 bis 3 in das elektrische Versorgungsnetz (120) einzuspeisen.

**Claims**

1. Method for feeding electric power of at least one wind turbine (100) or one wind farm (112) into an electric power supply network (120) having a network voltage (U) and a network frequency (f), wherein

- real electric power (P) and/or reactive electric power (Q) is fed-in and
- the fed-in real power (P) is adjusted as a function of at least one network state via a real power control and/or
- the fed-in reactive power (Q) is adjusted as a function of at least one network state via a reactive power control

**characterized in that**

- the fed-in real power (P) and/or the fed-in reactive power (Q) is adjusted as a function of the network state via an adjustment function ($F_{si}$, $F_{S2}$), wherein
- the adjustment function outputs a desired value of the real power to be fed in or the reactive power to be fed in as a function which depends on the network state, and
- for adjusting the fed-in real power (P) or the reactive power (Q) the adjustment function is varied or switched as a function of the network sensitivity, wherein

the network sensitivity NS is defined by the formula

$$NS = \frac{\Delta U}{\Delta P}$$

or by the formula

$$NS = \frac{\Delta f}{\Delta P}$$

with $\Delta P$ as the change in the fed-in real power, $\Delta U$ as the resulting change in the network voltage and $\Delta f$ as the resulting change in the network frequency.

2. Method according to claim 1,
**characterized in that**
the real power control and/or the reactive power control is varied as a function of

- a short-circuit current ratio (SCR) and/or
- an external specification, in particular via an external signal.

3. Method according to claim 1 or 2,
**characterized in that**
the fed-in real power (P) is reduced with increasing network frequency (f) as soon as the network frequency (f) has exceeded a threshold frequency value ($f_S$) and until it has reached an upper frequency value ($f_{max}$), and the slope of the network frequency-dependent reduction and/or the threshold frequency value ($f_S$) and/or the upper frequency value ($f_{max}$) are variable.

4. Wind turbine (100) for feeding electric power (P) into an electric power supply network (120), wherein the wind turbine (100) is suitable for feeding electric power (P) into the electric power supply network (120) according to a method according to one of claims 1 to 3.

5. Wind farm (112) for feeding electric power (P) into an electric power supply network (120), wherein the wind farm (112) is suitable for feeding electric power (P) into the electric power supply network (120) according to a method according to one of claims 1 to 3.

**Revendications**

1. Procédé servant à injecter une puissance électrique d'au moins une éolienne (100) ou d'un parc éolien (112) dans un réseau d'alimentation électrique (120) avec une tension de réseau (U) et une fréquence de réseau (f), dans lequel

- une puissance active (P) électrique et/ou une puissance réactive (Q) électrique sont injectées, et

- la puissance active (P) injectée est réglée par l'intermédiaire d'une commande de puissance active en fonction d'au moins un état de réseau, et/ou

- la puissance réactive (Q) injectée est réglée par l'intermédiaire d'une commande de puissance réactive en fonction d'au moins un état de réseau,

**caractérisé en ce que**

- la puissance active (P) injectée et/ou la puissance réactive (Q) injectée sont réglées par l'intermédiaire d'une fonction de réglage ($F_{S1}$, $F_{S2}$) en fonction de l'état de réseau, dans lequel

- la fonction de réglage émet une valeur de consigne de la puissance active à injecter ou de la puissance réactive à injecter en tant que fonction dépendant de l'état de réseau, et

- pour régler la puissance active (P) injectée ou la puissance réactive (Q) injectée, la fonction de réglage est modifiée ou changée en fonction d'une sensibilité de réseau,

dans lequel la sensibilité de réseau NS est définie par la formule :

$$NS = \frac{\Delta U}{\Delta P}$$

ou par la formule

$$NS = \frac{\Delta f}{\Delta P}$$

avec $\Delta P$ en tant que modification d'une puissance active injectée, $\Delta U$ en tant que modification résultante de la tension de réseau et $\Delta f$ en tant que modification résultante de la fréquence de réseau.

2. Procédé selon la revendication 1,
**caractérisé en ce que**
la commande de puissance active et/ou la commande de puissance réactive sont modifiées en fonction

- d'un rapport de courant de court-circuit (SCR) et/ou
- d'une spécification externe, en particulier par l'intermédiaire d'un signal externe.

3. Procédé selon la revendication 1 ou 2,

**caractérisé en ce que**
la puissance active (P) injectée est réduite au fur et à mesure que la fréquence de réseau (f) augmente dès que la fréquence de réseau (f) a dépassé une valeur de seuil de fréquence ($f_S$) et jusqu'à ce qu'elle ait atteint une valeur supérieure de fréquence ($f_{max}$), et que la hausse de la réduction en fonction de la fréquence de réseau et/ou de la valeur de seuil de fréquence ($f_S$) et/ou de la valeur supérieure de fréquence ($f_{max}$) peuvent être modifiées.

4. Eolienne (100) servant à injecter une puissance (P) électrique dans un réseau d'alimentation électrique (120), dans laquelle
l'éolienne (100) est préparée pour injecter une puissance (P) électrique selon un procédé selon l'une quelconque des revendications 1 à 3 dans le réseau d'alimentation électrique (120).

5. Parc éolien (112) servant à injecter une puissance (P) électrique dans un réseau d'alimentation électrique (120), dans lequel
le parc éolien (112) est préparée pour injecter une puissance (P) électrique selon un procédé selon l'une quelconque des revendications 1 à 3 dans le réseau d'alimentation électrique (120).

**Fig. 1**

**Fig. 2**

$F_{S1}$

$S$

$f$

$P_{Soll}$

$S^{J}$

$F_{S2}$

$P_{Soll}$

$P_{Soll}$

100

12

14

μ

2

8

AC / DC

DC / AC

6

10

4

**Fig. 3**

$P$

$P_N$

$F_{S2}$

$\Delta P$

$F_{S1}$

0

$f_N$  $f_S$  $f_{max}$  $f$

**Fig. 4**

$P$

$P_N$

$V_1$

$F_S$

$P_{min}$

$V_3$

$V_2$

0

$f_N$  $f_S$  $f_{max}$  $f$

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6784564 B
- US 6891281 B
- US 6965174 B
- US 7462946 B
- DE 102008017715 A1
- DE 102008039429 A1
- EP 2275674 A2
- US 20130015660 A1
- US 20100207456 A1
- WO 2012056564 A
- CN 100566069 C

**In der Beschreibung aufgeführte Nicht-Patentliteratur**

- Technische Richtlinie Erzeugungsanlagen am Mittelspannungsnetz. BDEW, Juni 2008
- TransmissionCode 2007, Network and System Rules of the German Transmission System Operators. VDN, August 2007